# EUROPEAN PATENT SPECIFICATION

(11) **EP 2 960 041 B1**
(45) Date of publication and mention of the grant of the patent: **15.11.2017**
(21) Application number: 15173267.4
(22) Date of filing: 23.06.2015
(51) Int. Cl.: B29C 45/50, B29C 45/17

(54) **INJECTION MOLDING MACHINE**
SPRITZGIESSMASCHINE
MACHINE DE MOULAGE A INJECTION

(30) Priority: 25.06.2014 JP 2014130718
(43) Date of publication of application: 30.12.2015
(73) Proprietor: SUMITOMO HEAVY INDUSTRIES, LTD., Tokyo 141-6025 (JP)
(72) Inventor: MATSUTAKE, Yoshitaka, Chiba, 263-0001 (JP)
(74) Representative: Louis Pöhlau Lohrentz

(56) References cited:
- EP-A1- 1 674 233
- EP-A2- 1 293 325
- DE-A1-102006 026 819

## Description

### BACKGROUND OF THE INVENTION

### Field of the Invention

The present invention relates to an injection molding machine.

### Description of Related Art

An injection molding machine has a mold clamping unit which performs mold closing, mold clamping, and mold opening of a mold unit, an injection unit which fills the mold unit with a molding material, an ejector unit which pushes a molding product out from the mold unit, and the like. The mold clamping unit, the injection unit, or the ejector unit has a motor as a drive source (refer to, for example, pamphlet of International Publication No. WO2005/068155).

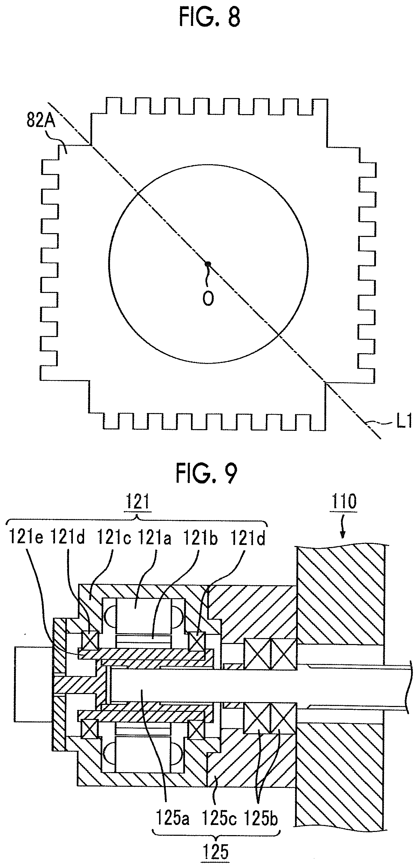

Fig. 9 is a diagram showing a main section of a mold clamping unit of the related art. A mold clamping unit 110 has a mold clamping motor 121 and a motion conversion mechanism 125 for converting the rotation motion of the mold clamping motor 121 into linear motion.

The mold clamping motor 121 has, in addition to a stator 121a and a rotor 121b, a motor frame 121c, a bearing 121d, an output shaft 121e, and the like. The motor frame 121c retains the bearing 121d, the bearing 121d rotatably supports the output shaft 121e, and the output shaft 121e is fixed to the rotor 121b, thereby rotating along with the rotor 121b.

The motion conversion mechanism 125 has a ball screw shaft 125a which rotates along with the output shaft 121e, a bearing 125b which rotatably supports the ball screw shaft 125a, a fixing member 125c which fixes the bearing 125b so as to be unable to move in an axial direction, and the like. The ball screw shaft 125a is detachably spline-coupled to a tubular member which rotates along with the output shaft 121e. If the mold clamping motor 121 is driven, thereby rotating the ball screw shaft 125a, a ball screw nut which is screwed to the ball screw shaft 125a advances and retreats.

In the related art, the axial length of a motor such as the mold clamping motor 121 is long. For this reason, the overall length of the injection molding machine is long.

European Patent Application EP 1 674 233 A1 discloses an injection molding machine comprising a motor with a stator and with a rotor that carries a magnet. The rotor is rotatably supported by bearings at its axially and radially outer ends. Furthermore, a bearing box is rotationally coupled to the rotor while being axially movable, said box housing thrust bearings via which it is axially coupled to a ball-screw-shaft-spline-shaft unit.

A similar injection molding machine is disclosed in EP 1 293 325 A2, too.

GermanPatentApplication DE 10 2006 026 819 Aldiscloses an injection molding machine comprising a plasticizing screw that is driven by a linear and rotating drive consisting of two subsequently turned hollow shaft motors. The hollow shafts of these motors are rotatably supported via bearings on the motor housings.

### SUMMARY OF THE INVENTION

The present invention is defined by the features of independent claim 1. Preferred embodiments are disclosed in the sub-claims.

The present invention has been made in view of the above-described problem and has a main object to provide an injection molding machine in which the axial length of a motor can be shortened.

To solve the above-described problem, according to an embodiment of the invention, there is provided an injection molding machine including a motor which includes a stator and a rotor, a rotary member which rotates along with the rotor, and a bearing which rotatably supports the rotor and/or the rotary member, in which the rotor includes a magnet section, and at least a part of the bearing is disposed further toward the inside in a radial direction of the rotor than the magnet section and disposed at a position overlapping the magnet section in an axial direction, whereas the bearing is retained by a platen support, movable plate or motor bracket to which the stator is fixed.

According to the aspect of the present invention, an injection molding machine in which the axial length of a motor can be shortened is provided.

### BRIEF DESCRIPTION OF THE DRAWINGS

Fig. 1 is a diagram showing an injection molding machine according to an embodiment of the present invention.
Fig. 2 is a diagram showing a main section of a mold clamping unit according to the embodiment of the present invention.
Fig. 3 is a diagram showing a main section of an injection unit according to the embodiment of the present invention.
Fig. 4 is a diagram showing a main section of an injection unit according to a first modified example.
Fig. 5 is a diagram showing a main section of an injection unit according to a second modified example.
Fig. 6 is a diagram showing an electromagnetic steel sheet according to the embodiment of the present invention.
Fig. 7 is a diagram showing the outer peripheral surface of a stator core which is made by laminating the electromagnetic steel sheets of Fig. 6.
Fig. 8 is a diagram showing an electromagnetic steel sheet according to a modified example.
Fig. 9 is a diagram showing a main section of a mold clamping unit of the related art.

### DETAILED DESCRIPTION OF THE INVENTION

Hereinafter, a mode for carrying out the present invention will be described with reference to the drawings. However, in each of the drawings, an identical or a corresponding configuration is denoted by an identical or a corresponding reference numeral and a description thereof is omitted.

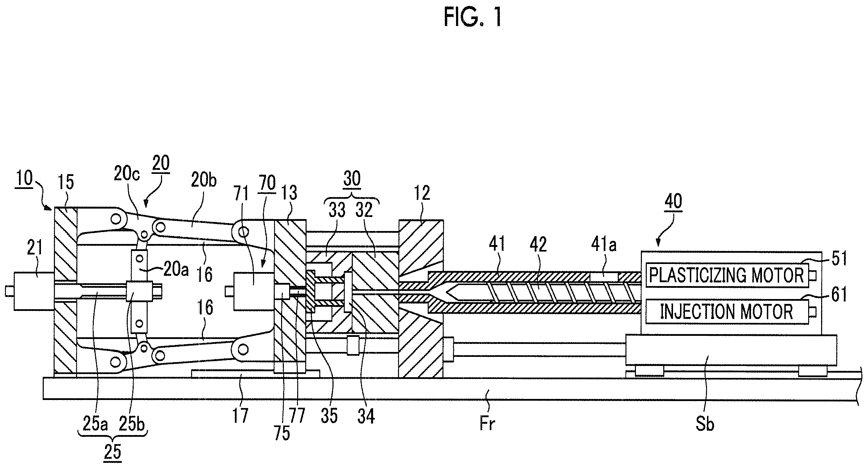

Fig. 1 is a diagram showing an injection molding machine according to an embodiment of the present invention. The injection molding machine shown in Fig. 1 has a frame Fr, a mold clamping unit 10, an injection unit 40, and an ejector unit 70.

First, the mold clamping unit 10 will be described with reference to Fig. 1 and the like. The mold clamping unit 10 performs mold closing, mold clamping, and mold opening of a mold unit 30. The mold clamping unit 10 has a stationary platen 12, a movable platen 13, a rear platen 15, a tie bar 16, a toggle mechanism 20, a mold clamping motor 21, and a motion conversion mechanism 25. In the description of the mold clamping unit 10, a description will be made regarding a direction of movement (a rightward direction in Fig. 1) of the movable platen 13 when performing mold closing as the front and a direction of movement (a leftward direction in Fig. 1) of the movable platen 13 when performing mold opening as the rear.

The stationary platen 12 is fixed to the frame Fr. A stationary mold 32 is mounted on the surface facing the movable platen 13 in the stationary platen 12.

The movable platen 13 is made so as to be able to move along a guide (for example, a guide rail) 17 which is laid on the frame Fr, and is made so as to be able to advance and retreat with respect to the stationary platen 12. A movable mold 33 is mounted on the surface facing the stationary platen 12 in the movable platen 13.

The movable platen 13 advances and retreats with respect to the stationary platen 12, whereby the mold closing, the mold clamping, and the mold opening are performed. The mold unit 30 is configured with the stationary mold 32 and the movable mold 33.

The rear platen 15 is connected to the stationary platen 12 through a plurality of (for example, four) tie bars 16 and placed on the frame Fr so as to be able to move in a mold opening and closing direction. In addition, the rear platen 15 may be made so as to be able to move along a guide which is laid on the frame Fr. The guide of the rear platen 15 may be shared by the guide 17 of the movable platen 13.

In addition, in this embodiment, a configuration is made such that the stationary platen 12 is fixed to the frame Fr and the rear platen 15 is movable in the mold opening and closing direction with respect to the frame Fr. However, a configuration may be made such that the rear platen 15 is fixed to the frame Fr and the stationary platen 12 is movable in the mold opening and closing direction with respect to the frame Fr.

The tie bars 16 are made so as to be parallel to each other in the mold opening and closing direction and extend according to a mold clamping force. A mold clamping force detector is provided in at least one of the tie bars 16. The mold clamping force detector may be a strain gauge type and detects the strain of the tie bar, thereby detecting the mold clamping force.

In addition, the mold clamping force detector is not limited to the strain gauge type and may be a piezoelectric type, a capacitive type, a hydraulic type, an electromagnetic type, or the like, and a mounting position thereof is also not limited to the tie bar 16.

The toggle mechanism 20 is disposed between the movable platen 13 and the rear platen 15. The toggle mechanism 20 is configured with a cross head 20a, a plurality of links 20b and 20c, and the like. The link 20b on one side is pivotably mounted on the movable platen 13, and the link 20c on the other side is pivotably mounted on the rear platen 15. The links 20b and 20c are pivotably connected to each other by a pin or the like. The plurality of links 20b and 20c are bent and stretched by advancing and retreating the cross head 20a, whereby the movable platen 13 advances and retreats with respect to the rear platen 15.

The mold clamping motor 21 is mounted on the rear platen 15 and advances and retreats the cross head 20a, thereby advancing and retreating the movable platen 13. The motion conversion mechanism 25 for converting the rotation motion of the mold clamping motor 21 into linear motion and transmitting the linear motion to the cross head 20a is provided between the mold clamping motor 21 and the cross head 20a.

The mold clamping motor 21 is driven, thereby advancing the movable platen 13, whereby the mold closing is performed. After the completion of the mold closing, a mold clamping force which is obtained by multiplying a thrust force of the mold clamping motor 21 by a toggle magnification is generated, and the mold clamping is performed by the mold clamping force. At the time of the mold clamping, a cavity 34 is formed between the movable mold 33 and the stationary mold 32, and the cavity 34 is filled with a liquid molding material. The molding material in the cavity 34 is solidified, thereby becoming a molding product. Thereafter, the mold clamping motor 21 is driven, thereby retreating the movable platen 13, whereby the mold opening is performed.

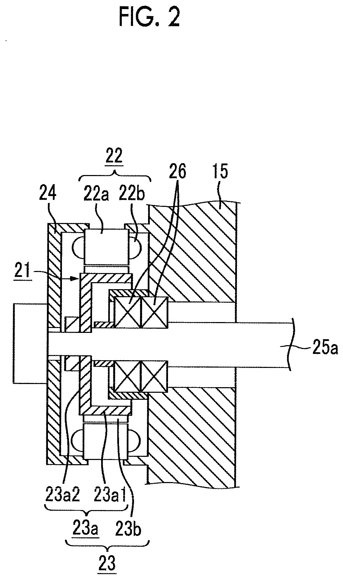

Fig. 2 is a diagram showing a main section of the mold clamping unit according to the embodiment of the present invention. The mold clamping unit 10 shown in Fig. 2 includes the mold clamping motor 21, a motor bracket 24, the motion conversion mechanism 25 (refer to Fig. 1), a bearing 26, and the like.

The mold clamping motor 21 may be a motor with a frame. However, the mold clamping motor 21 may be a frameless motor and may be open radially outward. Since there is no frame, the external form of the mold clamping motor 21 is small. Further, outside air easily enters thereinto, and thus cooling efficiency is good. The mold clamping motor 21 has a stator 22 and a rotor 23.

The stator 22 has, for example, a stator core 22a and a stator coil 22b. The stator core 22a may be a laminate of electromagnetic steel sheets. The stator coil 22b is disposed in a slot of the stator core 22a. In addition, instead of the stator coil 22b, a permanent magnet may be used.

The rotor 23 has, for example, a rotor core 23a and a permanent magnet 23b as a magnet section. The permanent magnet 23b is mounted on the outer periphery of the rotor core 23a. In addition, as the magnet section, instead of the permanent magnet, an electromagnet may be used, and the electromagnet may be formed as a portion of the rotor core.

The rotor core 23a is configured with, for example, a tubular portion 23al and a connection portion 23a2. The tubular portion 23a1 forms a space on the inside in a radial direction thereof. The connection portion 23a2 protrudes radially inward from an end portion in the axial direction of the tubular portion 23a1 and connects the tubular portion 23a1 and a ball screw shaft 25a. In addition, the connection portion 23a2 may protrude radially inward from a central portion in the axial direction of the tubular portion 23a1, and the shape of the rotor core 23a may be varied.

The motor bracket 24 fixes the stator 22 with the stator 22 sandwiched between itself and the rear platen 15. The motor bracket 24 forms a gap between itself and the rear platen 15, thereby exposing the outer peripheral surface of the stator 22.

The motion conversion mechanism 25 includes the ball screw shaft 25a and a ball screw nut 25b. The ball screw shaft 25a is a rotary member which rotates along with the rotor 23. The ball screw shaft 25a may be fixed so as to be unable to move in the axial direction with respect to the rotor 23. On the other hand, the ball screw nut 25b is fixed to the cross head 20a. If the mold clamping motor 21 is driven, thereby rotating the ball screw shaft 25a, the ball screw nut 25b and the cross head 20a advance and retreat.

In addition, in this embodiment, the ball screw shaft 25a rotates and the ball screw nut 25b moves linearly. However, the motion of the ball screw shaft 25a and the ball screw nut 25b may be varied. For example, a configuration may be made in which the ball screw nut 25b rotates and the ball screw shaft 25a moves linearly. A configuration may be made in which one of the ball screw shaft 25a and the ball screw nut 25b is fixed and the other rotates and moves linearly. In this case, a bearing which rotatably supports the other is used and a member (for example, the cross head 20a) which retains the bearing moves linearly. Instead of a ball screw, a roller screw may be used. The roller screw may be either a planetary roller screw or a circulation roller screw.

The bearing 26 is mounted on the ball screw shaft 25a and rotatably supports the ball screw shaft 25a. The bearing 26 is retained by the rear platen 15 and absorbs a radial load and a thrust load. A plurality of bearings 26 may be provided in the axial direction of the ball screw shaft 25a. In addition, the bearing 26 may be retained by the motor bracket 24, instead of the rear platen 15.

At least a part of the bearing 26 is disposed farther toward the inside in the radial direction of the rotor 23 than the permanent magnet 23b and are disposed at a position overlapping the permanent magnet 23b in the axial direction (a right-left direction in Fig. 2). Since the bearing 26 is inserted into the rotor 23 , the outer diameter of the rotor 23 is large. In general, the larger the outer diameter of the rotor 23 and the larger the axial length of the rotor 23, the larger the torque of the mold clamping motor 21 is. According to this embodiment, since the outer diameter of the rotor 23 is larger than in the related art, in a case where a predetermined torque is desired, the axial length can be shortened. Further, in a case where it is desired to increase torque, the axial length need not be extended. In a case where the axial length is the same, torque can be increased.

At least a part of the bearing 26 may be disposed on the inside of the tubular portion 23a1. The permanent magnet 23b may be mounted on the tip of the connection portion 23a2 without the tubular portion 23a1. However, when the permanent magnet 23b is mounted on the outer periphery of the tubular portion 23a1, the posture of the permanent magnet 23b is stabilized.

The bearing 26 is mounted on the ball screw shaft 25a and rotatably supports the ball screw shaft 25a, thereby rotatably supporting the rotor 23. The bearing 26 is used as a common bearing for both the motion conversion mechanism 25 and the mold clamping motor 21. Accordingly, the number of parts can be reduced and sliding resistance can be reduced.

In addition, a configuration may be made in which the bearing 26 is mounted on the rotor 23 and rotatably supports the rotor 23, thereby rotatably supporting the ball screw shaft 25a. Also in this case, the number of parts can be reduced and sliding resistance can be reduced.

In addition, a configuration may be made in which the bearings 26 are respectively mounted on the rotor 23 and the ball screw shaft 25a and rotatably support the rotor 23 and the ball screw shaft 25a. In this case, the bearing 26 which is mounted on the rotor 23 and the bearing 26 which is mounted on the ball screw shaft 25a may be disposed concentrically.

Next, the injection unit 40 will be described with reference to Fig. 1 and the like. The injection unit 40 is installed on a slide base Sb capable of advancing and retreating with respect to the frame Fr, and is made so as to be able to advance and retreat with respect to the mold unit 30. The injection unit 40 comes into contact with the mold unit 30 and fills the mold unit 30 with a molding material.

The injection unit 40 has a cylinder 41, a screw 42, a plasticizing motor 51, and an injection motor 61. In the description of the injection unit 40, unlike in the description of the mold clamping unit 10, a description will be made regarding a direction of movement (the leftward direction in Fig. 1) of the screw 42 when performing filling as the front and a direction of movement (the rightward direction in Fig. 1) of the screw 42 when performing plasticizing as the rear.

The cylinder 41 heats a molding material fed from a feed port 41a. The feed port 41a is formed in a rear portion of the cylinder 41. A heat source such as a heater is provided in the outer periphery of the cylinder 41.

The screw 42 is disposed so as to be able to rotate and be able to advance and retreat in the cylinder 41.

The plasticizing motor 51 rotates the screw 42, thereby sending the molding material forward along a helical groove of the screw 42. The molding material is gradually melted by heat from the cylinder 41 while being sent forward. The screw 42 retreats as a liquid molding material is sent to the front of the screw 42 and accumulated in a front portion of the cylinder 41.

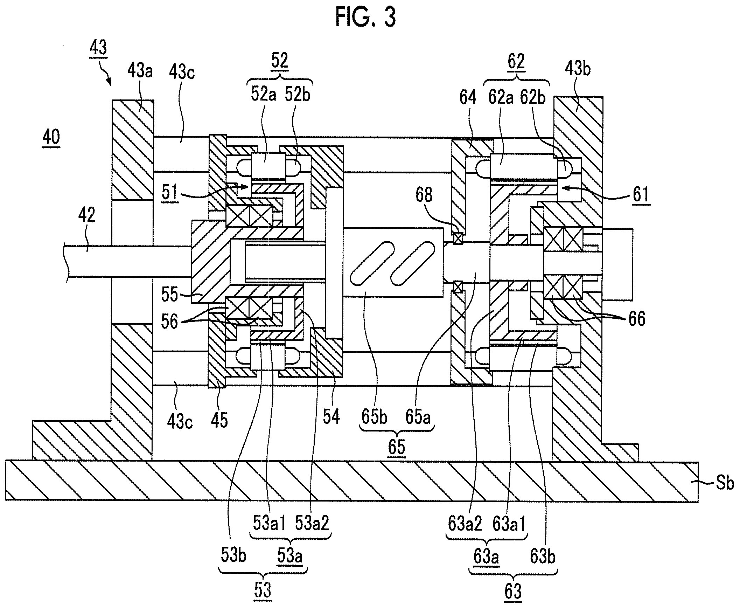

The injection motor 61 advances the screw 42, thereby making the cavity 34 of the mold unit 30 be filled with the liquid molding material accumulated in front of the screw 42. Thereafter, the injection motor 61 presses the screw 42 forward, thereby applying pressure to the molding material in the cavity 34. The molding material for responding to a shortage due to shrinkage can be replenished. A motion conversion mechanism 65 (refer to Fig. 3) for converting the rotation motion of the injection motor 61 into the linear motion of the screw 42 is provided between the injection motor 61 and the screw 42.

Fig. 3 is a diagram showing a main section of the injection unit according to the embodiment of the present invention. The injection unit 40 shown in Fig. 3 has an injection frame 43, a movable plate 45, the plasticizing motor 51, a motor bracket 54, a bearing 56, the injection motor 61, a motor bracket 64, the motion conversion mechanism 65, a bearing 66, and the like.

The injection frame 43 is fixed to the slide base Sb. The injection frame 43 is configured with a front support 43a, a rear support 43b, a plurality of guide rods 43c, and the like. The front support 43a and the rear support 43b are disposed with a distance therebetween and connected by the plurality of guide rods 43c. The cylinder 41 (refer to Fig. 1) is mounted on the front support 43a, and the injection motor 61 is mounted on the rear support 43b.

The movable plate 45 is disposed between the front support 43a and the rear support 43b and is made so as to be able to advance and retreat along the guide rods 43c. The rotation of the movable plate 45 is prevented by the plurality of guide rods 43c. The screw 42 advances and retreats according to the advance and retreat of the movable plate 45. The plasticizing motor 51 is mounted on the movable plate 45.

The injection motor 61 maybe a motor with a frame. However, the injection motor 61 may be a frameless motor and may be open radially outward. Since there is no frame, the external form of the injection motor 61 is small. Further, outside air easily enters thereinto, and thus cooling efficiency is good. The injection motor 61 has a stator 62 and a rotor 63.

The stator 62 has, for example, a stator core 62a and a stator coil 62b. The stator core 62a may be a laminate of electromagnetic steel sheets. The stator coil 62b is disposed in a slot of the stator core 62a. In addition, instead of the stator coil 62b, a permanent magnet may be used.

The rotor 63 has, for example, a rotor core 63a and a permanent magnet 63b as a magnet section. The permanent magnet 63b is mounted on the outer periphery of the rotor core 63a. In addition, as the magnet section, instead of the permanent magnet, an electromagnet may be used, and the electromagnet may be formed as a portion of the rotor core.

The rotor core 63a is configured with, for example, a tubular portion 63a1 and a connection portion 63a2. The tubular portion 63a1 forms a space on the inside in the radial direction thereof. The connection portion 63a2 protrudes radially inward from an end portion in the axial direction of the tubular portion 63a1 and connects the tubular portion 63a1 and a ball screw shaft 65a. In addition, the connection portion 63a2 may protrude radially inward from a central portion in the axial direction of the tubular portion 63a1, and the shape of the rotor core 63a may be varied.

The motor bracket 64 fixes the stator 62 with the stator 62 sandwiched between itself and the rear support 43b. The motor bracket 64 forms a gap between itself and the rear support 43b, thereby exposing the outer peripheral surface of the stator 62.

The motor bracket 64 may retain a bearing 68 which rotatably supports the ball screw shaft 65a. In addition, the bearing 68 may not be provided, and an opening portion into which a ball screw nut 65b is inserted may be formed in the motor bracket 64. In a case where the stroke of the ball screw nut 65b is the same, the distance between the front support 43a and the rear support 43b can be shortened, and thus the overall length of the injection unit 40 can be shortened.

The motion conversion mechanism 65 includes the ball screw shaft 65a and the ball screw nut 65b. The ball screw shaft 65a is a rotary member which rotates along with the rotor 63. The ball screw shaft 65a may be fixed so as to be unable to move in the axial direction with respect to the rotor 63. On the other hand, the ball screw nut 65b is fixed to the movable plate 45 through the motor bracket 54 of the plasticizing motor 51. If the injection motor 61 is driven, thereby rotating the ball screw shaft 65a, the ball screw nut 65b or the movable plate 45 advances and retreats, and thus the screw 42 advances and retreats.

In addition, in this embodiment, the ball screw shaft 65a rotates and the ball screw nut 65b moves linearly. However, the motion of the ball screw shaft 65a and the ball screw nut 65b may be varied. For example, a configuration may be made in which the ball screw nut 65b rotates and the ball screw shaft 65a moves linearly. A configuration may be made in which one of the ball screw shaft 65a and the ball screw nut 65b is fixed and the other rotates and moves linearly. In this case, a bearing which rotatably supports the other is used and a member (for example, the movable plate 45) which retains the bearing moves linearly. A modified example of the motion conversion mechanism 65 will be described later. Further, instead of a ball screw, a roller screw may be used. The roller screw may be either a planetary roller screw or a circulation roller screw.

The bearing 66 rotatably supports the ball screw shaft 65a. The bearing 66 is retained by the rear support 43b and absorbs a radial load and a thrust load. A plurality of bearings 66 may be provided in the axial direction of the ball screw shaft 65a. In addition, the bearing 66 may be retained by the motor bracket 64, instead of the rear support 43b.

At least a part of the bearing 66 is disposed further toward the inside in the radial direction of the rotor 63 than the permanent magnet 63b and are disposed at a position overlapping the permanent magnet 63b in the axial direction (a right-left direction in Fig. 3). Since the bearing 66 is inserted into the rotor 63 , the outer diameter of the rotor 63 is large. In general, the larger the outer diameter of the rotor 63 and the larger the axial length of the rotor 63, the larger the torque of the injection motor 61 is. According to this embodiment, since the outer diameter of the rotor 63 is larger than in the related art, in a case where a predetermined torque is desired, the axial length can be shortened. Further, in a case where it is desired to increase torque, the axial length need not be extended. In a case where the axial length is the same, torque can be increased.

At least a part of the bearing 66 may be disposed on the inside of the tubular portion 63a1. The permanent magnet 63b may be mounted on the tip of the connection portion 63a2 without the tubular portion 63a1. However, when the permanent magnet 63b is mounted on the outer periphery of the tubular portion 63a1, the posture of the permanent magnet 63b is stabilized.

The bearing 66 is mounted on the ball screw shaft 65a and rotatably supports the ball screw shaft 65a, thereby rotatably supporting the rotor 63. The bearing 66 is used as a common bearing for both the motion conversion mechanism 65 and the injection motor 61. Accordingly, the number of parts can be reduced and sliding resistance can be reduced.

In addition, a configuration may be made in which the bearing 66 is mounted on the rotor 63 and rotatably supports the rotor 63, thereby rotatably supporting the ball screw shaft 65a. Also in this case, the number of parts can be reduced and sliding resistance can be reduced.

In addition, a configuration may be made in which the bearings 66 are respectively mounted on the rotor 63 and the ball screw shaft 65a and rotatably support the rotor 63 and the ball screw shaft 65a. In this case, the bearing 66 which is mounted on the rotor 63 and the bearing 66 which is mounted on the ball screw shaft 65a may be disposed concentrically.

The plasticizing motor 51 may be a motor with a frame. However, the plasticizing motor 51 may be a frameless motor and may be open radially outward. Since there is no frame, the external form of the plasticizing motor 51 is small. Further, outside air easily enters thereinto, and thus cooling efficiency is good. The plasticizing motor 51 has a stator 52 and a rotor 53.

The stator 52 has, for example, a stator core 52a and a stator coil 52b. The stator core 52a may be a laminate of electromagnetic steel sheets. The stator coil 52b is disposed in a slot of the stator core 52a. In addition, instead of the stator coil 52b, a permanent magnet may be used.

The rotor 53 has, for example, a rotor core 53a and a permanent magnet 53b as a magnet section. The permanent magnet 53b is mounted on the outer periphery of the rotor core 53a. In addition, as the magnet section, instead of the permanent magnet, an electromagnet may be used, and the electromagnet may be formed as a portion of the rotor core.

The rotor core 53a is configured with, for example, a tubular portion 53a1 and a connection portion 53a2. The tubular portion 53a1 forms a space on the inside in the radial direction thereof. The connection portion 53a2 protrudes radially inward from an end portion in the axial direction of the tubular portion 53a1 and connects the tubular portion 53a1 and a rotary shaft 55. In addition, the connection portion 53a2 may protrude radially inward from a central portion in the axial direction of the tubular portion 53a1, and the shape of the rotor core 53a may be varied.

The motor bracket 54 fixes the stator 52 with the stator 52 sandwiched between itself and the movable plate 45. The motor bracket 54 forms a gap between itself and the movable plate 45, thereby exposing the outer peripheral surface of the stator 52.

The rotary shaft 55 is a rotary member which rotates along with the rotor 53. The rotary shaft 55 may be fixed so as to be unable to move in the axial direction with respect to the rotor 53. The rotary shaft 55 is connected to the screw 42. If the plasticizing motor 51 is driven, thereby rotating the rotary shaft 55, the screw 42 rotates.

The center line of the rotary shaft 55 and the center line of the ball screw shaft 65a are disposed on the same straight line. An insertion hole into which the ball screw shaft 65a is inserted is formed in the rotary shaft 55. Due to the formation of the insertion hole, the distance between the front support 43a and the rear support 43b can be shortened, and thus the overall length of the injection unit 40 can be shortened.

The bearing 56 is mounted on the rotary shaft 55 and rotatably supports the rotary shaft 55. The bearing 56 is retained by the movable plate 45 and absorbs a radial load and a thrust load. A plurality of bearings 56 may be provided in the axial direction of the rotary shaft 55. Inaddition, the bearing 56 maybe retained by the motor bracket 54, instead of the movable plate 45.

At least a part of the bearing 56 is disposed further toward the inside in the radial direction of the rotor 53 than the permanent magnet 53b and are disposed at a position overlapping the permanent magnet 53b in the axial direction (the right-left direction in Fig. 3). Since the bearing 56 is inserted into the rotor 53, the outer diameter of the rotor 53 is large. In general, the larger the outer diameter of the rotor 53 and the larger the axial length of the rotor 53, the larger the torque of the plasticizing motor 51 is. According to this embodiment, since the outer diameter of the rotor 53 is larger than in the related art, in a case where a predetermined torque is desired, the axial length can be shortened. Further, in a case where it is desired to increase torque, the axial length need not be extended. In a case where the axial length is the same, torque can be increased.

At least a part of the bearing 56 may be disposed on the inside of the tubular portion 53a1. The permanent magnet 53b may be mounted on the tip of the connection portion 53a2 without the tubular portion 53a1. However, when the permanent magnet 53b is mounted on the outer periphery of the tubular portion 53a1, the posture of the permanent magnet 53b is stabilized.

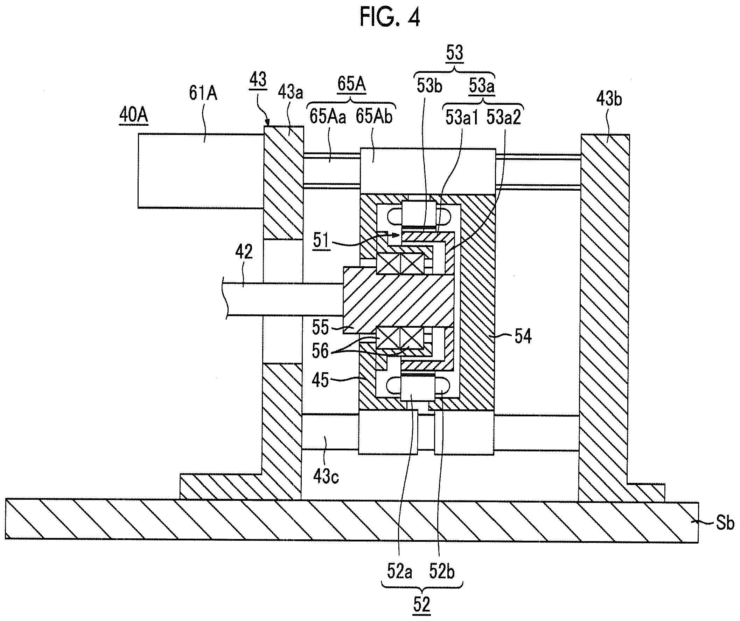

Next, an injection unit of a first modified example will be described with reference to Fig. 4. The injection motor 61 shown in Fig. 3 is mounted on the rear support 43b. In contrast, an injection motor 61A shown in Fig. 4 is mounted on the front support 43a. Then, some of the plurality of guide rods 43c shown in Fig. 3 are replaced by a ball screw shaft 65Aa shown in Fig. 4. The injection motor 61A or the ball screw shaft 65Aa may be in plurality and may be disposed symmetrically with respect to the center line of the screw 42. In addition, since the structure of the injection motor 61A shown in Fig. 4 may be the same as the structure of the injection motor 61 shown in Fig. 3, a description thereof is omitted.

The ball screw shaft 65Aa shown in Fig. 4 is a rotary member which rotates along with a rotor of the injection motor 61A, similarly to the ball screw shaft 65a shown in Fig. 3. The ball screw shaft 65Aa may be fixed so as to be unable to move in the axial direction with respect to the rotor of the injection motor 61A.

A ball screw nut 65Ab shown in Fig. 4 is fixed to the movable plate 45, similarly to the ball screw nut 65b shown in Fig. 3. If the injection motor 61A is driven, thereby rotating the ball screw shaft 65Aa, the ball screw nut 65Ab or the movable plate 45 advances and retreats, and thus the screw 42 advances and retreats.

Incidentally, in the ball screw nut 65Ab shown in Fig. 4, unlike in the ball screw nut 65b shown in Fig. 3, at least a portion thereof is disposed on the outside in the radial direction of the plasticizing motor 51 and disposed at a position overlapping the plasticizing motor 51 in the axial direction (the right-left direction in Fig. 4). Accordingly, the overall length of an injection unit 40A can be shortened.

In addition, in Figs. 3 and 4, as a member for guiding the movable plate 45, the guide rod 43c is used. However, a guide rail which is laid on the slide base Sb may be used, and the guide rod 43c may not be provided.

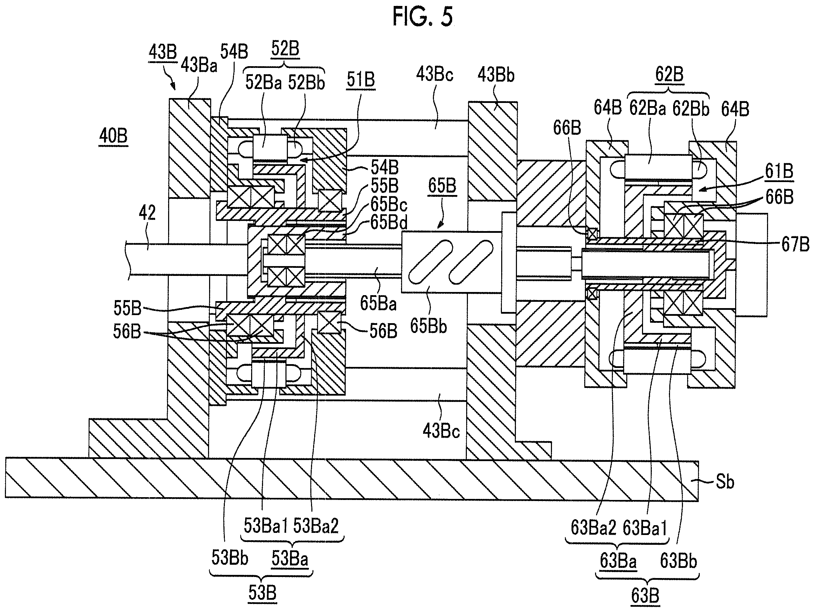

Next, an injection unit of a second modified example will be described with reference to Fig. 5. The plasticizing motor 51 shown in Fig. 3 is mounted on the movable plate 45 and is made so as to be able to advance and retreat with respect to the slide base Sb. In contrast, a plasticizing motor 51B shown in Fig. 5 is mounted on a front support 43Ba and is made so as to be unable to advance and retreat with respect to the slide base Sb. The front support 43Ba and a rear support 43Bb are disposed with a distance therebetween and are connected by a plurality of connection rods 43Bc. An injection frame 43B is configured with the front support 43Ba, the rear support 43Bb, and the plurality of connection rods 43Bc.

The plasticizing motor 51B shown in Fig. 5 is configured in the same manner as the plasticizing motor 51 shown in Fig. 3 and has a stator 52B and a rotor 53B. The stator 52B has, for example, a stator core 52Ba and a stator coil 52Bb. On the other hand, the rotor 53B has, for example, a rotor core 53Ba and a permanent magnet 53Bb as a magnet section. The rotor core 53Ba is configured with, for example, a tubular portion 53Ba1 and a connection portion 53Ba2. The tubular portion 53Ba1 forms a space on the inside in the radial direction thereof. The connection portion 53Ba2 connects the tubular portion 53Ba1 and a rotary shaft 55B.

A motor bracket 54B is fixed to the front support 43Ba. A plurality of motor brackets 54B are disposed with a distance therebetween and fixes the stator 52B with the stator 52B sandwiched therebetween. The plurality of motor brackets 54B forms a gap therebetween, thereby exposing the outer peripheral surface of the stator 52B. Each of the motor brackets 54B retains a bearing 56B.

The rotary shaft 55B is a rotary member which rotates along with the rotor 53B. The rotary shaft 55B may be fixed so as to be unable to move in the axial direction with respect to the rotor 53B. The rotary shaft 55B is connected to the screw 42 through a bearing holder 65Bd (described later) and the like. If the plasticizing motor 51B is driven, thereby rotating the rotary shaft 55B, the screw 42 rotates.

The center line of the rotary shaft 55B and the center line of a motion conversion mechanism 65B are disposed on the same straight line. An insertion hole into which the motion conversion mechanism 65B is inserted is formed in the rotary shaft 55B. Due to the formation of the insertion hole, the distance between the front support 43Ba and the rear support 43Bb can be shortened, and thus the overall length of an injection unit 40B can be shortened.

The bearing 56B is mounted on the rotary shaft 55B and rotatably supports the rotary shaft 55B. The bearing 56B is retained by the motor bracket 54B and absorbs a radial load and a thrust load. A plurality of bearings 56B may be provided in the axial direction of the rotary shaft 55B. In addition, the bearing 56B may be retained by the front support 43Ba, instead of the motor bracket 54B.

At least a part of the bearing 56B is disposed farther toward the inside in the radial direction of the rotor 53B than the permanent magnet 53Bb and are disposed at a position overlapping the permanent magnet 53Bb in the axial direction (the right-left direction in Fig. 5). Since the bearing 56B is inserted into the rotor 53B, the outer diameter of the rotor 53B is large. In general, the larger the outer diameter of the rotor 53B and the larger the axial length of the rotor 53B, the larger the torque of the plasticizing motor 51B is. According to this embodiment, since the outer diameter of the rotor 53B is larger than in the related art, in a case where a predetermined torque is desired, the axial length can be shortened. Further, in a case where it is desired to increase torque, the axial length need not be extended. In a case where the axial length is the same, torque can be increased.

At least a part of the bearing 56B may be disposed on the inside of the tubular portion 53Ba1. The permanent magnet 53Bb may be mounted on the tip of the connection portion 53Ba2 without the tubular portion 53Ba1. However, when the permanent magnet 53Bb is mounted on the outer periphery of the tubular portion 53Ba1, the posture of the permanent magnet 53Bb is stabilized.

An injection motor 61B shown in Fig. 5 may be a frameless motor, similarly to the injection motor 61 shown in Fig. 3, and maybe open radially outward. The injection motor 61B has a stator 62B, a rotor 63B, a motor bracket 64B, a bearing 66B, and an output shaft 67B,

The stator 62B shown in Fig. 5 has a stator core 62Ba and a stator coil 62Bb, similarly to the stator 62 shown in Fig. 3.

The rotor 63B shown in Fig. 5 has a rotor core 63Ba and a permanent magnet 63Bb as a magnet section, similarly to the rotor 63 shown in Fig. 3. The rotor core 63Ba is configured with, for example, a tubular portion 63Ba1 and a connection portion 63Ba2. The tubular portion 63Ba1 forms a space on the inside in the radial direction thereof. The connection portion 63Ba2 connects the tubular portion 63Ba1 and the output shaft 67B. The output shaft 67B is a rotary member which is fixed to the rotor 63B and rotates along with the rotor 63B.

The motor bracket 64B shown in Fig. 5 is fixed to the rear support 43Bb. A plurality of motor brackets 64B are disposed with a distance therebetween and fix the stator 62B with the stator 62B sandwiched therebetween. The plurality of motor brackets 64B forms a gap therebetween, thereby exposing the outer peripheral surface of the stator 62B. Each of the motor brackets 64B retains the bearing 66B.

The bearing 66B rotatably supports the output shaft 67B and absorbs a radial load and a thrust load. A plurality of bearings 66B may be disposed in the axial direction of the output shaft 67B.

At least a part of the bearing 66B is disposed farther toward the inside in the radial direction of the rotor 63B than the permanent magnet 63Bb and are disposed at a position overlapping the permanent magnet 63Bb in the axial direction (the right-left direction in Fig. 5). Since the bearing 66B is inserted into the rotor 63B, the outer diameter of the rotor 63B becomes large. In general, the larger the outer diameter of the rotor 63B and the larger the axial length of the rotor 63B, the larger the torque of the injection motor 61B is. According to this embodiment, since the outer diameter of the rotor 63B is larger than in the related art, in a case where a predetermined torque is desired, the axial length can be shortened. Further, in a case where it is desired to increase torque, the axial length need not be extended. In a case where the axial length is the same, torque can be increased.

At least a part of the bearing 66B may be disposed on the inside of the tubular portion 63Ba1. The permanent magnet 63Bb may be mounted on the tip of the connection portion 63Ba2 without the tubular portion 63Ba1. However, when the permanent magnet 63Bb is mounted on the outer periphery of the tubular portion 63Ba1, the posture of the permanent magnet 63Bb is stabilized.

The motion conversion mechanism 65B converts the rotation motion of the injection motor 61B into the linear motion of the screw 42. The motion conversion mechanism 65B includes a ball screw shaft 65Ba, a ball screw nut 65Bb, a bearing 65Bc, a bearing holder 65Bd, and the like.

The ball screw shaft 65Ba is spline-coupled to a tubular member which rotates along with the output shaft 67B, so as to be able to advance and retreat. On the other hand, the ball screw nut 65Bb is fixed to the rear support 43Bb. If the injection motor 61B is driven, the ball screw shaft 65Ba advances and retreats while rotating.

The bearing holder 65Bd retains the bearing 65Bc, and the bearing 65Bc rotatably supports the ball screw shaft 65Ba. The bearing 65Bc of the ball screw shaft 65Ba and the bearing 66B of the injection motor 61B are separately provided. The ball screw shaft 65Ba advances and retreats while rotating, whereby the bearing holder 65Bd advances and retreats. The screw 42 is fixed to the bearing holder 65Bd, and thus the screw 42 advances and retreats according to the advance and retreat of the bearing holder 65Bd.

The bearing holder 65Bd is spline-coupled to the rotary shaft 55B, thereby being able to advance and retreat with respect to the rotary shaft 55B and to rotate along with the rotary shaft 55B. The rotary shaft 55B is a rotary member which rotates along with the rotor 53B of the plasticizing motor 51B. If the plasticizing motor 51B is driven, thereby rotating the rotary shaft 55B, the bearing holder 65Bd or the screw 42 rotates.

In addition, in this embodiment, the ball screw shaft 65Ba is spline-coupled to a tubular member which rotates along with the output shaft 67B, so as to be able to advance and retreat. However, the ball screw shaft 65Ba may be directly spline-coupled to the rotor 63B of the injection motor 61B. In this case, the ball screw shaft 65Ba is a rotary member which rotates along with the rotor 63B. The ball screw shaft 65Ba is made so as to be able to move in the axial direction with respect to the rotor 63B.

In addition, the injection units 40, 40A, and 40B shown in Figs. 3, 4, and 5 are an inline screw type. However, the injection units 40, 40A, and 40B may be a pre-plasticizing type. In an inject ion unit of a pre-plasticizing type, a molding material melted in a plasticizing cylinder is fed to an injection cylinder and the molding material is then injected from the injection cylinder into a mold unit. A screw is disposed in the plasticizing cylinder so as to be able to rotate or so as to be able to rotate and be able to advance and retreat, and a plunger is disposed in the injection cylinder so as to be able to advance and retreat. The injection unit of a pre-plasticizing type has a motor which rotates the screw, a motor which advances and retreats the plunger, and the like.

Next, the ejector unit 70 will be described with reference to Fig. 1 and the like. The ejector unit 70 pushes the molding product out from the mold unit 30 after the molding opening. The ejector unit 70 has an ejector motor 71 and an ejector rod 77. In the description of the ejector unit 70, similarly to the description of the mold clamping unit 10, a description will be made regarding a direction of movement (the rightward direction in Fig. 1) of the movable platen 13 when performing the mold closing as the front and a direction of movement (the leftward direction in Fig. 1) of the movable platen 13 when performing the mold opening as the rear.

The ejector rod 77 is inserted into a through-hole of the movable platen 13 and made so as to be able to advance and retreat with respect to the movable platen 13. An ejection member 35 which is disposed in the movable mold 33 advances and retreats according to the advance and retreat of the ejector rod 77, and thus the ejection member 35 pushes the molding product out from the movable mold 33.

The ejector motor 71 advances and retreats the ejector rod 77. A motion conversion mechanism 75 for converting the rotation motion of the ejector motor 71 into the linear motion of the ejector rod 77 is provided between the ejector motor 71 and the ejector rod 77. The motion conversion mechanism 75 includes, for example, a ball screw, a roller screw, or the like.

The ejector motor 71 may be configured in the same manner as the mold clamping motor 21 or the injection motors 61, 61A, and 61B. The axial length of the ejector motor 71 can be shortened, and thus the overall length of the injection molding machine can be shortened.

The mold clamping motor, the plasticizing motor, the injection motor, and the ejector motor have been described above. However, the present invention can also be applied to motors other than the above motors. For example, the present invention can also be applied to a motor of an injection unit moving unit which advances and retreats the injection unit 40 with respect to the frame Fr, or an injection unit of a pre-plasticizing type.

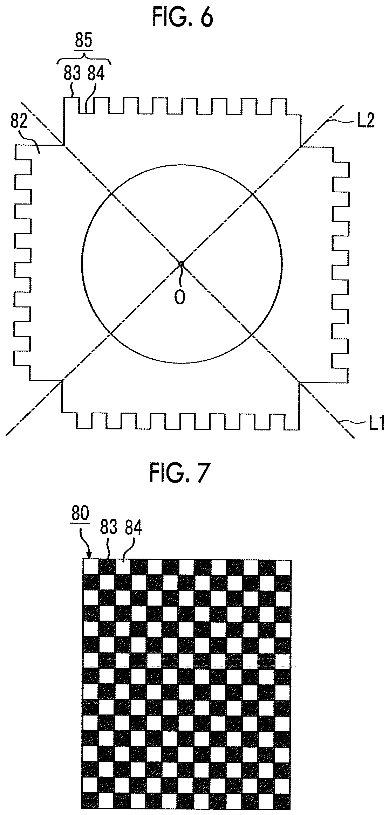

Fig. 6 is a diagram showing an electromagnetic steel sheet according to the embodiment of the present invention. Fig. 7 is a diagram showing a concavo-convex pattern of the outer peripheral surface of a stator core which is made by laminating the electromagnetic steel sheets shown in Fig. 6. In Fig. 7, a black portion indicates a convex portion 83 and a white portion indicates a concave portion 84.

A stator core 80 is made by laminating electromagnetic steel sheets 82 having the same shape and the same dimensions. The electromagnetic steel sheet 82 has, for example, a substantially rectangular shape and has, at the outer periphery thereof, a concavo-convex pattern 85 in which the convex portion 83 and the concave portion 84 are alternately arranged. The width of the convex portion 83 and the width of the concave portion 84 may be the same. The concavo-convex pattern 85 is point-symmetrical on the basis of a center O of the electromagnetic steel sheet 82 and may be line-symmetrical on the basis of diagonal lines L1 and L2 of the electromagnetic steel sheet 82.

One electromagnetic steel sheet 82 and another electromagnetic steel sheet 82 are laminated with the concavo-convex patterns 85 staggered, and for example, the electromagnetic steel sheets 82 are laminated with the convex portions 83 or the concave portions 84 staggered. It is acceptable if the convex portions 83 do not completely overlap each other and the concave portions 84 do not completely overlap each other.

For example, the electromagnetic steel sheets 82 are laminated to be rotated by 90° every predetermined number of sheets. The direction of rotation may be clockwise or counterclockwise. The electromagnetic steel sheets 82 may be laminated with the front and the back reversed every predetermined number of sheets.

In this way, in all four faces of the outer peripheral surface of the stator core 80, a predetermined number of convex portions 83 and a predetermined number of concave portions 84 are alternately arranged in a longitudinal direction and a lateral direction (a laminating direction of the electromagnetic steel sheets), as shown in Fig. 7. The surface area of the outer peripheral surface of the stator core 80 is larger, when compared to a case where the convex portions 83 and the concave portions 84 are continuously arranged in the lateral direction, and thus heat dissipation characteristics are good. This is particularly effective in the case of a frameless motor in which the outer peripheral surface of the stator core 80 is exposed. Further, since the electromagnetic steel sheets 82 having the same shape and the same dimensions are used, manufacturing costs or management costs can be reduced.

In addition, the number of convex portions 83 or concave portions 84 which are continuously arranged in the laminating direction of the electromagnetic steel sheets may be changed in the middle of the lamination of the electromagnetic steel sheets.

The stator core 80 may be applied to any of the mold clamping motor 21, the plasticizing motors 51 and 51B, the injection motors 61, 61A, and 61B, and the ejector motor 71 and may also be applied to the mold clamping motor 121 shown in Fig. 9, or the like. Further, the stator core 80 may also be applied to a motor which is mounted on equipment other than the injection molding machine.

Further, in this embodiment, the concavo-convex pattern 85 of the electromagnetic steel sheet 82 is point-symmetrical on the basis of the center O of the electromagnetic steel sheet 82. However, the concavo-convex pattern 85 may be non-point-symmetrical. For example, the concavo-convex pattern of an electromagnetic steel sheet 82A shown in Fig. 8 is non-point-symmetrical on the basis of the center O of the electromagnetic steel sheet 82A and is line-symmetrical on the basis of the diagonal line L1 of the electromagnetic steel sheet 82A. In the case of the electromagnetic steel sheet 82A, the electromagnetic steel sheets 82A are laminated to be rotated by 180° every predetermined number of sheets, whereby it is possible to improve heat dissipation characteristics in all four faces of the outer peripheral surface of the stator core. Further, the electromagnetic steel sheets 82A are laminated with the front and the back reversed every predetermined number of sheets, whereby it is possible to improve heat dissipation characteristics in two faces among the four faces forming the outer peripheral surface of the stator core.

Further, in this embodiment, the width of the convex portion 83 and the width of the concave portion 84 are the same. However, the widths may be different from each other, and the concavo-convex pattern which is formed on the outer peripheral surface of the stator core 80 may be varied.

The embodiment and the like of the injection molding machine have been described above. However, the present invention is not limited to the above-described embodiment and the like, and various modifications and improvements can be made within the scope of the concept of the present invention stated in the appended claims.

For example, the mold clamping unit 10 of the above-described embodiment includes the mold clamping motor 21 as a drive source. However, the mold clamping unit 10 may have a hydraulic cylinder, instead of the mold clamping motor 21. Further, the mold clamping unit 10 may have a linear motor for mold opening and closing and may have an electromagnet for molding clamping.

## Claims

1. An injection molding machine comprising:
a motor (21, 51, 51B, 61, 61A, 61B, or 71) which includes a stator (22, 52, 52B, 62, or 62B) and a rotor (23, 53, 53B, 63, or 63B) ;
a platen (14, 15), a support (43b, 43Ba), a movable plate (45) or a motor bracket (24, 54, 54B, 64, 64B) to which the stator (22, 52, 52B, 62, or 62B) is fixed;
a rotary member (25a, 55, 55B, 65a, 65Aa, 65Ba, or 67B) which rotates along with the rotor (23, 53, 53B, 63, or 63B); and
a bearing (26, 56, 56B, 66, or 66B) which rotatably supports the rotor (23, 53, 53B, 63, or 63B) and/or the rotary member (25a, 55, 55B, 65a, 65Aa, 65Ba, or 67B) and which is retained by said platen (14, 15), support (43b, 43Ba), movable plate (45) or motor bracket (24, 54, 54B, 64, 64B),
wherein the rotor (23, 53, 53B, 63, or 63B) includes a magnet section (23b, 53b, 53Bb, 63b, or 63Bb), and at least a part of the bearing (26, 56, 56B, 66, or 66B) is disposed farther toward the inside in a radial direction of the rotor (23, 53, 53B, 63, or 63B) than the magnet section (23b, 53b, 53Bb, 63b, or 63Bb) and is disposed at a position overlapping the magnet section (23b, 53b, 53Bb, 63b, or 63Bb) in an axial direction,
the rotor (23, 53, 53B, 63, or 63B) includes a tubular portion (23a1, 53a1, 53Ba1, 63a1, or 63Ba1) on which the magnet section (23b, 53b, 53Bb, 63b, or 63Bb) is mounted, and a connection portion (23a2, 53a2, 53Ba2, 63a2, or 63Ba2) which connects the tubular portion (23a1, 53a1, 53Ba1, 63a1, or 63Ba1) and the rotary member (25a, 55, 55B, 65a, 65Aa, 65Ba, or 67B), and
at least a part of the bearing (26, 56, 56B, 66, or 66B) is disposed on the inside of the tubular portion (23a1, 53a1, 53Ba1, 63a1, or 63Ba1).

2. The injection molding machine according to Claim 1, further comprising: a motion conversion mechanism (25, 65, 65B, or 75) for converting rotation motion of the motor (21, 51, 51B, 61, 61A, 61B, or 71) into linear motion.

3. The injection molding machine according to Claim 2, wherein the motion conversion mechanism (25, 65, 65B, or 75) includes the rotary member (25a, 55, 55B, 65a, 65Aa, 65Ba, or 67B).

4. The injection molding machine according to any one of Claims 1 to 3, wherein the bearing (26, 56, 56B, 66, or 66B) is mounted on one of the rotor (23, 53, 53B, 63, or 63B) and the rotary member (25a, 55, 55B, 65a, 65Aa, 65Ba, or 67B) and rotatably supports one of the rotor (23, 53, 53B, 63, or 63B) and the rotary member (25a, 55, 55B, 65a, 65Aa, 65Ba, or 67B), thereby rotatably supporting the other of the rotor (23, 53, 53B, 63, or 63B) and the rotary member (25a, 55, 55B, 65a, 65Aa, 65Ba, or 67B).

5. The injection molding machine according to any one of Claims 1 to 4, wherein the rotary member (25a, 55, 55B, 65a, 65Aa, 65Ba, or 67B) is made so as to be unable to move in the axial direction with respect to the rotor (23, 53, 53B, 63, or 63B).

6. The injection molding machine according to any one of Claims 1 to 4, wherein the rotary member (25a, 55, 55B, 65a, 65Aa, 65Ba, or 67B) is made so as to be able to move in the axial direction with respect to the rotor (23, 53, 53B, 63, or 63B).

7. The injection molding machine according to any one of Claims 1 to 6, wherein the motor (21, 51, 51B, 61, 61A, 61B, or 71) is a frameless motor.

8. The injection molding machine according to Claim 7, wherein the stator (22, 52, 52B, 62, or 62B) includes a stator core (22a, 52a, 52Ba, 62a, or 62Ba) which is made by laminating electromagnetic steel sheets (82 or 82A) including the same shape and the same dimensions,
the electromagnetic steel sheet (82 or 82A) includes a concavo-convex pattern (85) at an outer periphery, and
one electromagnetic steel sheet (82 or 82A) and another electromagnetic steel sheet (82 or 82A) are laminated with the concavo-convex patterns (85) staggered.

9. The injection molding machine according to Claim 8, wherein the electromagnetic steel sheet (82 or 82A) includes a substantially rectangular shape, and
the concavo-convex pattern (85) is line-symmetrical on the basis of a diagonal line on at least one side of the electromagnetic steel sheet (82 or 82A).

10. The injection molding machine according to Claim 8 or 9, wherein the electromagnetic steel sheet (82 or 82A) includes a substantially rectangular shape, and
one electromagnetic steel sheet (82 or 82A) and another electromagnetic steel sheet (82 or 82A) are laminated with the concavo-convex patterns (85) staggered by being rotated 90°.

## Patentansprüche

1. Spritzgießmaschine, die Folgendes umfasst:
einen Motor (21, 51, 51B, 61, 61A, 61B oder 71), der einen Stator (22, 52, 52B, 62 oder 62B) und einen Rotor (23, 53, 53B, 63 oder 63B) aufweist;
eine Werkzeugaufspannplatte (14, 15), einen Träger (43b, 43Ba), eine bewegliche Platte (45) oder eine Motorhalterung (24, 54, 54B, 64, 64B), an der der Stator (22, 52, 52B, 62 oder 62B) befestigt ist;
ein Drehelement (25a, 55, 55B, 65a, 65Aa, 65Ba oder 67B), das sich zusammen mit dem Rotor (23, 53, 53B, 63 oder 63B) dreht; und
ein Lager (26, 56, 56B, 66 oder 66B), das den Rotor (23, 53, 53B, 63 oder 63B) und/oder das Drehelement (25a, 55, 55B, 65a, 65Aa, 65Ba oder 67B) drehbar trägt und das durch die Werkzeugaufspannplatte (14, 15), den Träger (43b, 43Ba), die bewegliche Platte (45) oder die Motorhalterung (24, 54, 54B, 64, 64B) gehalten wird,
wobei der Rotor (23, 53, 53B, 63 oder 63B) einen Magnetabschnitt (23b, 53b, 53Bb, 63b oder 63Bb) aufweist und zumindest eine Komponente des Lagers (26, 56, 56B, 66 oder 66B) in einer radialen Richtung des Rotors (23, 53, 53B, 63 oder 63B) weiter zur Innenseite als der Magnetabschnitt (23b, 53b, 53Bb, 63b oder 63Bb) angeordnet ist und an einer Position angeordnet ist, an der sie den Magnetabschnitt (23b, 53b, 53Bb, 63b oder 63Bb) in einer axialen Richtung überlagert,
wobei der Rotor (23, 53, 53B, 63 oder 63B) einen röhrenförmigen Abschnitt (23a1, 53a1, 53Ba1, 63a1 oder 63Ba1), auf dem der Magnetabschnitt (23b, 53b, 53Bb, 63b oder 63Bb) angebracht ist, und einen Verbindungsabschnitt (23a2, 53a2, 53Ba2, 63a2 oder 63Ba2), der den röhrenförmigen Abschnitt (23a1, 53a1, 53Ba1, 63a1 oder 63Ba1) und das Drehelement (25a, 55, 55B, 65a, 65Aa, 65Ba oder 67B) verbindet, aufweist, und
zumindest eine Komponente des Lagers (26, 56, 56B, 66 oder 66B) auf der Innenseite des röhrenförmigen Abschnitts (23a1, 53a1, 53Ba1, 63a1 oder 63Ba1) angeordnet ist.

2. Spritzgießmaschine nach Anspruch 1, die ferner Folgendes umfasst: einen Bewegungsumsetzungsmechanismus (25, 65, 65B oder 75) zum Umsetzen der Drehbewegung des Motors (21, 51, 51B, 61, 61A, 61B oder 71) in eine geradlinige Bewegung.

3. Spritzgießmaschine nach Anspruch 2, wobei der Bewegungsumsetzungsmechanismus (25, 65, 65B oder 75) das Drehelement (25a, 55, 55B, 65a, 65Aa, 65Ba oder 67B) aufweist.

4. Spritzgießmaschine nach einem der Ansprüche 1 bis 3, wobei das Lager (26, 56, 56B, 66 oder 66B) entweder auf dem Rotor (23, 53, 53B, 63 oder 63B) oder auf dem Drehelement (25a, 55, 55B, 65a, 65Aa, 65Ba oder 67B) angebracht ist und entweder den Rotor (23, 53, 53B, 63 oder 63B) oder das Drehelement (25a, 55, 55B, 65a, 65Aa, 65Ba oder 67B) drehbar trägt, wodurch es das andere/den anderen des Rotors (23, 53, 53B, 63 oder 63B) oder des Drehelements (25a, 55, 55B, 65a, 65Aa, 65Ba oder 67B) drehbar trägt.

5. Spritzgießmaschine nach einem der Ansprüche 1 bis 4, wobei das Drehelement (25a, 55, 55B, 65a, 65Aa, 65Ba oder 67B) derart hergestellt ist, dass es sich in Bezug auf den Rotor (23, 53, 53B, 63 oder 63B) nicht in der axialen Richtung bewegen kann.

6. Spritzgießmaschine nach einem der Ansprüche 1 bis 4, wobei das Drehelement (25a, 55, 55B, 65a, 65Aa, 65Ba oder 67B) derart hergestellt ist, dass es sich in Bezug auf den Rotor (23, 53, 53B, 63 oder 63B) in der axialen Richtung bewegen kann.

7. Spritzgießmaschine nach einem der Ansprüche 1 bis 6, wobei der Motor (21, 51, 51B, 61, 61A, 61B oder 71) ein gehäuseloser Motor ist.

8. Spritzgießmaschine nach Anspruch 7, wobei der Stator (22, 52, 52B, 62 oder 62B) einen Statorkern (22a, 52a, 52Ba, 62a oder 62Ba) aufweist, der durch Laminieren von Blechen (82 oder 82A) aus elektromagnetischem Stahl, die dieselbe Form und dieselben Abmessungen enthalten, hergestellt ist,
wobei das Blech (82 oder 82A) aus elektromagnetischem Stahl an einem Außenumfang ein konkav-konvexes Muster (85) aufweist, und
ein Blech (82 oder 82A) aus elektromagnetischem Stahl und ein weiteres Blech (82 oder 82A) aus elektromagnetischem Stahl mit den konkav-konvexen Mustern (85) gegeneinander versetzt laminiert sind.

9. Spritzgießmaschine nach Anspruch 8, wobei das Blech (82 oder 82A) aus elektromagnetischem Stahl eine im Wesentlichen rechteckige Form aufweist, und
das konkav-konvexe Muster (85) auf der Basis einer diagonalen Linie auf mindestens einer Seite des Blechs (82 oder 82A) aus elektromagnetischem Stahl liniensymmetrisch ist.

10. Spritzgießmaschine nach Anspruch 8 oder 9, wobei das Blech (82 oder 82A) aus elektromagnetischem Stahl eine im Wesentlichen rechteckige Form aufweist, und
ein Blech (82 oder 82A) aus elektromagnetischem Stahl und ein weiteres Blech (82 oder 82A) aus elektromagnetischem Stahl mit den konkav-konvexen Mustern (85) gegeneinander versetzt laminiert sind, indem sie um 90° gedreht sind.

## Revendications

1. Machine de moulage par injection comprenant :
un moteur (21, 51, 51B, 61, 61A, 61B ou 71) qui comprend un stator (22, 52, 52B, 62 ou 62B) et un rotor (23, 53, 53B, 63 ou 63B) ;
une platine (14, 15), un support (43b, 43Ba), une plaque mobile (45) ou une console de moteur (24, 54, 54B, 64, 64B) auquel le stator (22, 52, 52B, 62 ou 62B) est fixé ;
un élément rotatif (25a, 55, 55B, 65a, 65Aa, 65Ba ou 67B) qui tourne conjointement avec le rotor (23, 53, 53B, 63 ou 63B) ; et
un palier (26, 56, 56B, 66 ou 66B) qui supporte, en rotation, le rotor (23, 53, 53B, 63 ou 63B) et/ou l'élément rotatif (25a, 55, 55B, 65a, 65Aa, 65Ba ou 67B) et qui est retenu par ladite platine (14, 15), le support (43b, 43Ba), la plaque mobile (45) ou la console de moteur (24, 54, 54B, 64, 64B),
dans laquelle le rotor (23, 53, 53B, 63 ou 63B) comprend une section magnétique (23b, 53b, 53Bb, 63b ou 63Bb), et
au moins une partie du palier (26, 56, 56B, 66 ou 66B) est disposée plus loin vers l'intérieur dans une direction radiale du rotor (23, 53, 53B, 63 ou 63B) que la section magnétique (23b, 53b, 53Bb, 63b ou 63Bb) et est disposée dans une position recouvrant la section magnétique (23b, 53b, 53Bb, 63b ou 63Bb) dans une direction axiale,
le rotor (23, 53, 53B, 63 ou 63B) comprend une partie tubulaire (23a1, 53a1, 53Ba1, 63a1 ou 63Ba1) sur laquelle la section magnétique (23b, 53b, 53Bb, 63b ou 63Bb) est montée et une partie de raccordement (23a2, 53a2, 53Ba2, 63a2 ou 63Ba2) qui raccorde la partie tubulaire (23a1, 53a1, 53Ba1, 63a1 ou 63Ba1) et l'élément rotatif (25a, 55, 55B, 65a, 65Aa, 65Ba ou 67B), et
au moins une partie du palier (26, 56, 56B, 66 ou 66B) est disposée à l'intérieur de la partie tubulaire (23a1, 53a1, 53Ba1, 63a1 ou 63Ba1).

2. Machine de moulage par injection selon la revendication 1, comprenant en outre : un mécanisme de conversion de mouvement (25, 65, 65B ou 75) pour convertir le mouvement de rotation du moteur (21, 51, 51B, 61, 61A, 61B ou 71) en mouvement linéaire.

3. Machine de moulage par injection selon la revendication 2, dans laquelle le mécanisme de conversion de mouvement (25, 65, 65B ou 75) comprend l'élément rotatif (25a, 55, 55B, 65a, 65Aa, 65Ba ou 67B).

4. Machine de moulage par injection selon l'une quelconque des revendications 1 à 3, dans laquelle le palier (26, 56, 56B, 66 ou 66B) est monté sur l'un parmi le rotor (23, 53, 53B, 63 ou 63B) et l'élément rotatif (25a, 55, 55B, 65a, 65Aa, 65Ba ou 67B) et supporte en rotation l'un parmi le rotor (23, 53, 53B, 63 ou 63B) et l'élément rotatif (25a, 55, 55B, 65a, 65Aa, 65Ba ou 67B), supportant ainsi, en rotation, l'autre parmi le rotor (23, 53, 53B, 63 ou 63B) et l'élément rotatif (25a, 55, 55B, 65a, 65Aa, 65Ba ou 67B).

5. Machine de moulage par injection selon l'une quelconque des revendications 1 à 4, dans laquelle l'élément rotatif (25a, 55, 55B, 65a, 65Aa, 65Ba ou 67B) est réalisé afin de ne pas pouvoir se déplacer dans la direction axiale par rapport au rotor (23, 53, 53B, 63 ou 63B).

6. Machine de moulage par injection selon l'une quelconque des revendications 1 à 4, dans laquelle l'élément rotatif (25a, 55, 55B, 65a, 65Aa, 65Ba ou 67B) est réalisé afin de pouvoir se déplacer dans la direction axiale par rapport au rotor (23, 53, 53B, 63 ou 63B).

7. Machine de moulage par injection selon l'une quelconque des revendications 1 à 6, dans laquelle le moteur (21, 51, 51B, 61, 61A, 61B ou 71) est un moteur monobloc.

8. Machine de moulage par injection selon la revendication 7, dans laquelle le stator (22, 52, 52B, 62 ou 62B) comprend un noyau de stator (22a, 52a, 52Ba, 62a ou 62Ba) qui est réalisé en stratifiant des tôles électromagnétiques (82 ou 82A) comprenant la même forme et les mêmes dimensions,
la tôle électromagnétique (82 ou 82A) comprend un modèle concavo-convexe (85) au niveau d'une périphérie externe, et
une tôle électromagnétique (82 ou 82A) et une autre tôle électromagnétique (82 ou 82A) sont stratifiées avec les modèles concavo-convexes (85) en quinconce.

9. Machine de moulage par injection selon la revendication 8, dans laquelle :
la tôle électromagnétique (82 ou 82A) comprend une forme sensiblement rectangulaire, et
le modèle concavo-convexe (85) est symétrique en ligne sur la base d'une ligne diagonale sur au moins un côté de la tôle électromagnétique (82 ou 82A).

10. Machine de moulage par injection selon la revendication 8 ou 9, dans laquelle la tôle électromagnétique (82 ou 82A) comprend une forme sensiblement rectangulaire, et
une tôle électromagnétique (82 ou 82A) et une autre tôle électromagnétique (82 ou 82A) sont stratifiées avec les modèles concavo-convexes (85) en quinconce, en étant entrainées en rotation à 90°.
